# EUROPÄISCHE PATENTSCHRIFT

(11) **EP 0 970 840 B1**
(45) Veröffentlichungstag und Bekanntmachung des Hinweises auf die Patenterteilung: **05.11.2008**
(21) Anmeldenummer: 99112561.8
(22) Anmeldetag: 01.07.1999
(51) Int. Cl.: H02H 7/122, H02H 7/08, H02P 6/00

(54) **Schutzeinrichtung gegen Spannungsrückwirkung permanenterregter elektrischer Antriebe**
Protection device against voltage kickback of permanently excited electrical drive
Dispositif de protection contre les rebonds de tension d'un entraînement électrique à excitation permanente

(30) Priorität: 08.07.1998 DE 29812191 U
(43) Veröffentlichungstag der Anmeldung: 12.01.2000
(73) Patentinhaber: SIEMENS AKTIENGESELLSCHAFT, 80333 München (DE)
(72) Erfinder: Ebert, Rainer, Dipl.-Ing., 09122 Chemnitz (DE); Fuchsloch, Jürgen, Dipl.-Ing., 91058 Erlangen (DE); Gehre, Hans-Joachim, Dipl.-Ing., 09119 Chemnitz (DE); Heeg, Dietmar, Dipl.-Ing., 09228 Wittgensdorf (DE); Imrich, Franz, Dipl.-Ing., 91058 Erlangen (DE)

(56) Entgegenhaltungen:
- DE-A- 3 817 916
- DE-A- 4 306 307
- PATENT ABSTRACTS OF JAPAN vol. 012, no. 493 (E-697), 22. Dezember 1988 (1988-12-22) & JP 63 206189 A (MATSUSHITA ELECTRIC IND CO LTD), 25. August 1988 (1988-08-25)
- ARTELT V: "SPINDLE-MOTOR PROVIDES QUALITY BOOST" ENGINEERING AND AUTOMATION, SIEMENS AKTIENGESELLSCHAFT, BERLIN, DE, Bd. 19, Nr. 6, 1997, Seiten 8-9, XP000739000 ISSN: 0939-2068

## Beschreibung

Die Erfindung bezieht sich auf eine Schutzeinrichtung gegen Spannungsrückwirkung permanenterregter elektrischer Antriebe, welche zwischen Antriebselektronik und Motor an die Motorphasen geschaltet ist.

Moderne Antriebskonzepte verwenden synchrone Motoren als Arbeitsmaschinen (beispielsweise für numerisch gesteuerte Werkzeugmaschinen und Roboter). Das synchrone Antriebskonzept ermöglicht die Realisierung zahlreicher Vorteile wie geringer Läufererwärmung und dadurch bedingtem geringerem Kühlaufwand sowie genauerer Werkstückbearbeitung. Darüber hinaus wird eine höhere Leistungsdichte im oberen Drehzahlbereich erreicht, woraus kürzere Nebenzeiten resultieren. Weiter wird eine höhere Drehmomentendichte im unteren Drehzahlbereich ermöglicht und dadurch beispielsweise bei Werkzeugmaschinen eine größere Zerspanleistung erreicht.

Um die hohen Drehzahlen zu erreichen, werden permanenterregte Spindelmotore eingesetzt. Solche Motoren werden im Feldschwächbetrieb auf Drehzahlen weit über der Nenndrehzahl betrieben. Im Störfall treten Spannungen an den Motorklemmen vom vielfachen der Nennspannung auf. Ein solcher Störfall oder gestörter Betrieb kann beispielsweise durch den Ausfall oder Stillsetzen der Regelung des Antriebes, einen Netzausfall, ein NOT-AUS, Leitungsunterbrechung usw. ausgelöst werden.

Kommt es zum Störfall im hohen Drehzahlbereich, so schaltet die Antriebsregelung und damit die Feldschwächung des Motors ab. Der Antrieb ist daraufhin nicht in der Lage, die Energie in das elektrische Netz zurückzuspeisen. Die Klemmenspannung am Motor kann bis auf die Leerlaufspannung >2 kV des Motors ansteigen. Als Folge tritt eine Umformatierung der Zwischenkreiskondensatoren auf und die Sperrspannung der Stromrichterventile eines Umrichters (z.B IGBT-Transistoren) überschritten werden. Dies führt zwangsläufig zur Zerstörung des Antriebes. Werden keine konstruktiven Maßnahmen getroffen, die verhindern, daß ein Schluß mit berührbaren Elektronikspannungen (niedervoltseitig) auftreten kann, so entsteht zusätzlich ein Sicherheitsrisiko für das Bedienpersonal.

Die JP 63206189 offenbart eine Schutzeinrichtung gegen Spannungsrückwirkung permanenterregter elektrischer Antriebe, wobei ein Komparator und eine Referenzspannung als Mittel zur Bildung eines Warnsignals vorgesehen sind. Die Schutzeinrichtung wird aus der gleichgerichteten Phasenspannung mit Energie versorgt. Die Motorklemmspannung wird bei Vorliegen einer schädlichen Spannungsrückwirkung kurzgeschlossen.

Aus der DE 38 17 916 ist eine Steuervorrichtung für einen bürstenlosen Motor bekannt, welche einen Kommutierungsausfall eines Wechselrichters verhindern kann. Hierbei wird eine Gegen-EMK des Motors erfasst und deren Änderung ausgewertet. Bei Überschreiten eines Grenzpegels wird der Betrieb des Motoransteuer-Wechselrichters gestoppt.

Aufgabe der vorliegenden Erfindung ist es daher, eine Schutzeinrichtung gegen Spannungsrückwirkung permanenterreger elektrischer Antriebe zu schaffen, durch die die im vorangehenden geschilderten Gefahren für Motor und Bedienpersonal sicher vermieden werden können.

Diese Aufgabe wird erfindungsgemäß gelöst durch eine Schutzeinrichtung gemäß Anspruch 1. Weitere Ausgestaltungen der Erfindung sind Gegenstand der abhängigen Ansprüche 2 bis 6.

Die zulässige Zwischenkreisspannung und notwendige Auslösespannungen für den Bremsbetrieb liegen eng beieinander. Die Schutzeinrichtung gemäß der vorliegenden Erfindung ermöglicht eine hohe Genauigkeit bei der Einstellung der Spannungsschwelle. Darüber hinaus wird eine sichere Abschaltung des Antriebes bei Überlastung der Schutzeinrichtung durch die umgesetzte Bremsenergie gewährleistet. Die Schutzeinrichtung benötigt darüber hinaus keine Hilfsenergie und kann dadurch einfach zwischen Motor und Antriebsregelung eingefügt werden.

Eine vorteilhafte Ausführungsform der Schutzeinrichtung gemäß der vorliegenden Erfindung zeichnet sich dadurch aus, daß bei Vorliegen einer schädlichen Spannungsrückwirkung das Kurzschlußmittel bis zum Erreichen einer Motordrehzahl "Null" aktiviert bleibt.

Die Schutzeinrichtung gemäß der vorliegenden Erfindung verwendet als Gleichrichtmittel eine Drehstrom-Diodenbrücke über die Motorphasen und als Kurschlußmittel einen Thyristor, welcher alle Motoranschlüsse über die Drehstrom-Diodenbrücke kurzschließt.

Eine weitere vorteilhafte Ausgestaltung der Schutzeinrichtung gemäß der vorliegenden Erfindung weist zusätzlich ein Mittel zur Unterbrechung der Antriebsregelung auf, welches durch das eindeutige Signal bei Vorliegen einer schädlichen Spannungsrückwirkung betätigt wird.

Nach einer weiteren vorteilhaften Ausgestaltung wird die Antriebsregelung zur Beendigung des Bremsvorganges unterbrochen.

In einer darüber hinausgehenden weitergehenden vorteilhaften Ausgestaltung der Schutzeinrichtung gemäß der vorliegenden Erfindung ist zum Schutz der Drehstrom-Diodenbrücke und des Thyristors ein Thermokontakt vorgesehen, durch den die Antriebsregelung unterbrechbar ist.

Zur weiteren Erhöhung der Zuverlässigkeit der Schutzeinrichtung gemäß der vorliegenden Erfindung zeichnet sich eine weitere vorteilhafte Ausgestaltung durch eine feste elektrische Kopplung zwischen Zwischenkreiskondensatoren der Antriebsregelung und den Motorphasen aus, wodurch bei Ausfall der Schutzeinrichtung eine auftretende Überspannung temporär auf die Kondensator-Formatierungsspannung begrenzbar ist.

Als weitere Vorteile der vorteilhaften Ausgestaltung ergeben sich durch die vorliegende Erfindung eine Verhinderung der Thyristorzündung während des Normalbetriebes durch das eindeutige Signal zur Anzeige einer auftretenden Überspannung bzw. für gestörten und ungestörten Betrieb. Durch dieses Signal wird das Zünden des Thyristors der Schutzeinrichtung während des normalen Betriebes des elektrischen Antriebes gesperrt.

Weitere Vorteile und Details der vorliegenden Erfindung ergeben sich anhand der nun folgenden Schilderung eines vorteilhaften Ausführungsbeispieles und in Verbindung mit den Figuren. Es zeigen:
- FIG 1: eine schematische Darstellung eines Systems mit permanenterregtem Motor und einer Schutzeinrichtung gemäß der vorliegenden Erfindung und
- FIG 2: ein Blockschltbild einer möglichen Schutzeinrichtung gemäß der vorliegenden Erfindung.

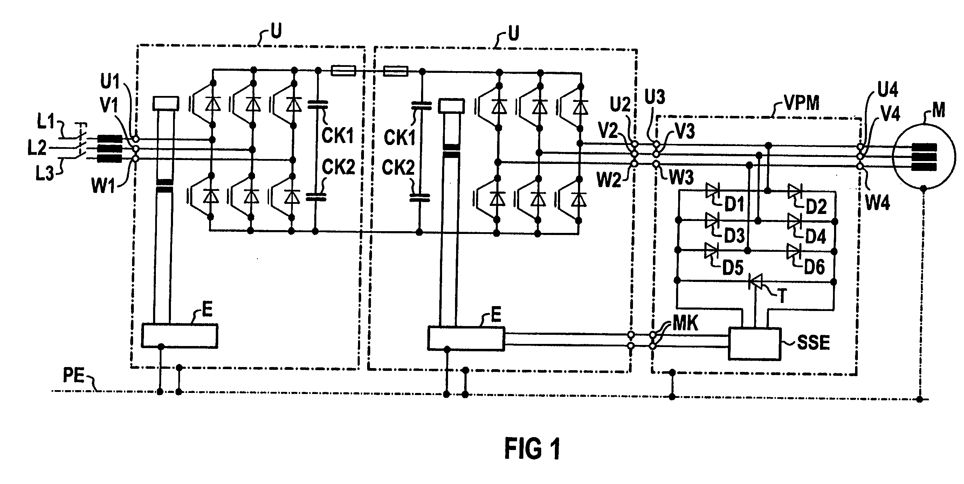

In der Darstellung nach FIG 1 ist eine schematische Darstellung des Systems mit permanenterregtem Motor M und einer Schutzeinrichtung gegen Spannungsrückwirkung VPM gezeigt. Auf der linken Seite ist ein Drehstrom-Netz mit den Netzphasen L1, L2 und L3 gezeigt, welche über einen Hauptschalter zu einem Umrichter U bestehend aus einem Gleichrichter, dem Spannungszwischenkreis und einem darauffolgenden Wechselsrichter mit Stromrichterventilen geführt wird. Ausgangsseitig stellt der Umrichter U die Phasenspannungen U2, V2 und W2 bereit. Die Schutzeinrichtung VPM ist zwischen den Umrichter U und den Motor M an die Netzphasen U3, V3 und W3 geschaltet. Die Schutzeinrichtung weist eine Drehstrom-Diodenbrücke aus Dioden D1 bis D6 auf. In den Ausgang der Diodenbrücke ist ein Thyristor T geschaltet und parallel dazu eine Spannungsschutzelektronik SSE. Ausgehend von der Spannungsschutzeleketronik SSE ist die Schutzeinrichtung VPM über einen Meldekontakt MK mit dem Umrichter U elektrisch verbunden. Der Umrichter U weist dazu eine Elektronik E zur Aktivierung/Deaktivierung der Stromrichterventile des Wechselrichters für die Antriebsregelung auf.

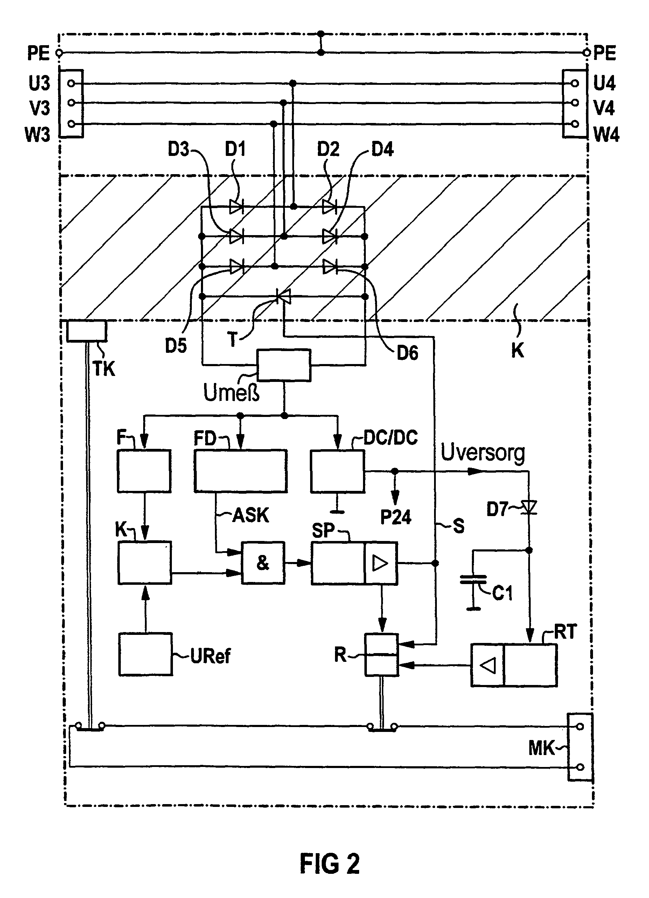

In der Darstellung gemäß FIG 2 ist ein Blockschaltbild der in FIG 1 lediglich schematisch dargestellten Schutzeinrichtung VPM gezeigt. Die Schutzeinrichtung ist zwischen den Umrichter U und den Motor M geschaltet. Die Schutzeinrichtung mißt die auftretende Motorklemmspannung an den Klemmen U4, V4 und W4 über die bereits geschilderte Drehstrom-Diodenbrücke mit den Dioden D1 bis D6. Die durch die Gleichrichtung gebildete Meßspannung Umess wird zu einem Filter F geführt und steuert auf einer festgelegten Spannungshöhe über das Triggersignal eines Komparators K, welcher durch eine Referenzspannung URef beaufschlagt ist, die nachfolgende Elektronik an. Eine Erkennungsschaltung - im Ausführungsbeispiel ein Fehlerdiskriminator FD - bildet ein Signal für den gestörten Betrieb und aktiviert ein UND-Gatter & zur Ansteuerung und Abspeicherung des Transistorzündsignales. Der Fehlerdiskriminator FD dient einer höheren Störfestigkeit. Der Schutz vor zu hohen Klemmspannungen zwischen Motor M und Antriebsregelung mit dem Umrichter U erfolgt durch Zünden des der Drehstrom-Diodenbrücke D1 bis D6 nachgeschalteten Thyristors T und den dadurch verursachten Kurzschluß aller Motoranschlüsse über die Drehstrom-Diodenbrücke.

Der Durchlaßwiderstand von Diodenbrücke D1 bis D6 und Thyristor T fungiert in dieser Anordnung als Bremslast. Der Zündimpuls des Thyristors T setzt ein Freigaberelais R in einen bistabilen Zustand. Dadurch wird die Antriebsregelung über den bereits geschilderten Meldekontakt MK bis zur Beendigung des Bremsvorganges des Motors unterbrochen, indem die bereits im Zusammenhang mit FIG 1 geschilderte Leitungsschleife des Meldekontaktes MK über das Relais R unterbrochen wird. Ein Rücksetzen des Freigaberelais R erfolgt über eine RESET-Triggerschaltung RT.

Die Stromversorgung Uversorg bzw. P24 der Schutzeinrichtung mit den entsprechenden Komponenten Filter F, Fehlerdiskriminator FD, Spannungskomparator K und Speicher SP sowie der RESET-Triggerschaltung RT wird mittels eines DC/DC-Wandlers aus den vom Motor ausgegebenen Spannungsimpulsen gespeist, welche durch die Gleichrichtung durch die Drehstrom-Diodenbrücke D1 bis D6 in Form der Spannung Umeß bereitsteht. Dadurch ist die Schutzeinrichtung autark und benötigt keine zusätzliche Hilfsenergie.

Die Dioden D1 bis D6 der Drehstrom-Diodenbrücke sowie der Thyristor T sind mit einem Kühlkörper K thermisch verbunden. Durch die in der Schutzeinrichtung VPM umgesetzte Bremsenergie erwärmt sich dieser Kühlkörper K. Ein Thermokontakt TK, welcher mit dem Kühlkörper K verbunden ist, schützt die Leistungsbauteile Thyristor T und Diodenbrücke D1 bis D6 vor Überhitzung durch Abschalten des Motors über den Meldekontakt MK und verhindert auf diese Weise weitere Bremszüge. Der Thermokontakt TK ist in Serie zum Freigaberelais R in die Leitungsschleife des Meldekontaktes MK geschleift.

Durch ein Einbeziehen der Spannungsbegrenzung durch die Zwischenkreiskondensatoren CK1 und CK2 (zu erkennen im Umrichter U in FIG 1) in das Sicherheitskonzept der Schutzeinrichtung durch eine feste Kopplung zwischen Zwischenkreiskondensatoren CK1 und CK2 sowie Motorklemmen wird bei einem Ausfall der Schutzeinrichtung VPM die auftretende zu hohe Motorklemmspannung für einen begrenzten Zeitraum von ca. 2 Minuten auf die Kondensator-Formatierungsspannung begrenzt.

Die Konstruktion ist so ausgeführt, daß bei Anschluß der Schutzeinrichtung VPM eine Reihenschaltung von Antriebsregelung und Umrichter U, der Schutzeinrichtung VPM selbst und dem Motor M zwingend entsteht. Leitungsunterbrechungen zwischen Motor M und Schutzeinrichtung VPM führen zu Funktionsbeeinträchtigungen und dadurch zur Fehlererkennung. Bei einer sternpunktförmigen Verdrahtung vom Motor M und der Schutzeinrichtung VPM sowie Antriebsregelung wäre eine Fehlererkennung nicht in jedem Fall gegeben.

Im folgenden soll nun die Funktion der Schutzeinrichtung VPM im ungestörten Betrieb näher erläutert werden.

Die pulsweitenmodulierten Signale des Umrichters U gelangen über die Schutzeinrichtung VPM an den Motor M. In der Schutzeinrichtung VPM wird durch die Phasengleichrichterbrücke mit den Dioden D1 bis D6 das Meßsignal Umeß gebildet. Dieses Meßsignal besteht aus Rechteckimpulsen, die entsprechend des geforderten Leistungsbedarfes des Motors M in der Impulsweite variieren. Die Rechteckimpulse entstehen durch die große Sperrverzögerungszeit und das Fehlen eines Kondensators am Ausgang der Phasengleichrichterbrücke. Dieser Effekt wird im nachfolgenden Fehlerdiskriminiator FD für die Erkennung eines gestörten Betriebes ausgenutzt.

Die maximale Impulsperiode Tmeß beträcht 3/2 der Pulsweitenmodulationsfrequenz f_{PWM}. Bei einer minimalen Frequenz f_{PWM} = 3,2 kHz ist die maximale Impulsperiode Tmeß gleich 3/(2 x 3,2 kHz) = 0,47 mmsec. Der Fehlerdiskriminator integriert diese Zeit und bildet das Signal ASK zum Aufruf des Spannungskomparators K. Für den Fall eines ungestörten Betriebes sperrt dieses Signal. Ein Auslösen des Thyristors T und ein Kurzschluß der Phasensignale U, V, W wird dadurch verhindert.

Als zusätzliche Verknüpfung dient der Spannungskomparator K. Der Komparator K mißt die Spannungsimpulsehöhe über das Filter F. Beträgt die maximale Amplitude von der gleichgerichteten Spannung Umeß < 830 V ± 1%, so wird eine Zündung des Thyristors T und damit verbunden ein Kurzschluß der Motorklemmen durch die UND-Verknüpfung des UND-Gatters & gesperrt. Der Ausgang der UND-Verknüpfung bleibt somit inaktiv. Die nachgeschalteten Schaltungsteile werden daher nicht aktiviert und der Meldekontakt MK, angesteuert über das Freigaberelais R, bleibt ebenfalls geschlossen.

Der DC/DC-Wandler, welcher über Umeß versorgt wird, bildet die Stromversorgung der Schutzeinrichtung VPM. Die dabei gebildete Spannung P24 beträgt beispielsweise +24V.

Dieser geschilderte Zustand gewährleistet den normalen Betrieb zwischen Antriebsregelung und Motor M. Für den Fall, daß Umeß > = 830V ± 1% Spitze erreicht und die maximale Impulsperiode Tmeß > 0,5 mmsec wird, kommt es zur Betriebsart gestörter Betrieb.

Der gestörte Betrieb, welcher im folgenden näher erläutert werden soll, wird aktiv durch das Auftreten eines der eingangs genannten Störfälle (Ausfall oder Stillsitzen der Regelung des Antriebes, Netzausfall, Notaus, Leitungsunterbrechung etc.). Die Regelung des Antriebes ist somit ausgefallen oder stillgesetzt. Der Fehlerdiskriminator FD ruft den Spannungskomparator K auf. Die nachfolgende Speicher- und Treiberschaltung SP zündet den Thyristor T über das Signal S und setzt das Freigaberelais R. Die Phasensignale U,V, W werden durch den gezündeten Thyristor T kurzgeschlossen und die interne Stromversorgung abgeschaltet. Der Meldekontakt MK unterbricht das Signal "Freigabe Antrieb" und verhindert ein erneutes Zuschalten der Arbeitsmaschine.

Grund hierfür ist, daß ein Rücksetzen des Thyristors T erst nach Beendigung des Bremsvorganges möglich ist. Der Thyristor T bleibt gezündet bis zur Motordrehzahl "Null". Damit die RESET-Triggerschaltung RT zur Rücksetzung des Freigaberelais R noch mit Energie versorgt werden kann, ist zwischen den DC/DC-Wandler und die RESET-Triggerelektronik RT eine Diode D7 in Flußrichtung geschaltet, deren Kathode über einen Kondensator C1 an Masse geführt ist. Die im Kondensator C1 gespeicherte Energie wird über den Komparator des RESET-Triggers abgebaut. Bei einem Kondensator C1 mit 6,8 mmF ist nach ca. 2,5 Minuten die Triggerschwelle von 13 V DC erreicht und das Relais R wird durch die im Kondensator C1 gespeicherte Restenergie zurückgesetzt. Die Regelung des Antriebes wird wieder freigeschaltet durch den geschlossenen Meldekontakt MK.

Der Thermokontakt TK mißt die Kühlkörpertemperatur des Kühlkörpers K zum Schutz vor Überlastung und unterbricht bei einer Temperatur von beispielsweise > 80°C den Meldekontakt MK der Schutzeinrichtung VPM. Ein Zuschalten erfolgt wieder bei einer Temperatur von beispielsweise < 60°C.

## Patentansprüche

1. Schutzeinrichtung (VPM) gegen Spannungsrückwirkung permanenterregter elektrischer Antriebe, welche zwischen Antriebselektronik (A) und Motor (M) an die Motorphasen (U3,V3,W3 bzw. U4, V4, W4) geschaltet ist, wobei
- ein Mittel (F,FD,K,&,SP) zur Bildung eines eindeutigen Signals (S) durch Gleichrichtung (D1...D6) einer auftretenden Überspannung vorgesehen ist, welches das Vorliegen einer schädlichen Spannungsrückwirkung signalisiert,
- die Schutzeinrichtung (VPM) aus der gleichgerichteten auftretenden Phasenspannung (U2,V2,W2) mit Energie (Uversorg) versorgt wird,
- ein Mittel (T) zum Kurzschluß der Motorklemmspannung vorgesehen ist, welches durch das eindeutige Signal (S) bei Vorliegen einer schädlichen Spannungsrückwirkung ausgelöst wird, wobei ein Durchlaßwiderstand der Gleichrichtmittel (D1...D6) und/oder des Kurzschlußmittels (T) als Bremslast wirkt, **dadurch gekennzeichnet, daß** das Gleichrichtmittel als Drehstrom-Diodenbrücke (D1...D6) über die Motorphasen (U3, V3, W3 bzw. U4,V4,W4) und das Kurzschlußmittel als Thyristor (T) ausgestaltet sind, wobei der Thyristor (T) alle Motoranschlüsse über die Drehstrom-Diodenbrücke (D1...D6) kurzschließt.

2. Schutzeinrichtung nach Anspruch 1, **dadurch gekennzeichnet, daß** bei Vorliegen einer schädlichen Spannungsrückwirkung das Kurzschlußmittel (T) bis zum Erreichen einer Motordrehzahl Null aktiviert bleibt.

3. Schutzeinrichtung nach einem Ansprüche 1 oder 2,
**dadurch gekennzeichnet, daß** durch das eindeutige Signal (S) bei Vorliegen einer schädlichen Spannungsrückwirkung zusätzlich ein Mittel (MK) betätigt wird, durch das die Antriebsregelung unterbrochen wird.

4. Schutzeinrichtung nach Anspruch 3, **dadurch gekennzeichnet, daß** die Antriebsregelung bis zur Beendigung des Bremsvorganges unterbrochen wird.

5. Schutzeinrichtung nach Anspruch 3 oder 4, **dadurch gekennzeichnet, daß** zum Schutz der Drehstrom-Diodenbrücke (D1...D6) und des Thyristors (T) ein Thermokontakt (TK) vorgesehen ist, durch den die Antriebsregelung unterbrechbar ist.

6. Schutzeinrichtung nach einem der Ansprüche 1 bis 5,
**dadurch gekennzeichnet, daß** durch eine feste elektrische Kopplung zwischen Zwischenkreiskondensatoren (Ck1, Ck2) der Antriebsregelung (A) und den Motorphasen (U3,V3,W3 bzw. U4,V4,W4) bei Ausfall der Schutzeinrichtung (VPM) eine auftretende Überspannung temporär auf die Kondensator-Formatierungsspannung begrenzbar ist.

## Claims

1. Protective device (VPM) against voltage reaction of electrical drives with permanent-magnet excitation, which protective device (VPM) is connected between drive electronics (A) and a motor (M) to the motor phases (U3, V3, W3 and U4, V4, W4, wherein
- a means (F, FD, K, & SP) is provided in order to form a unique signal (S) by rectification (D1 ... D6) of any overvoltage that occurs, which signal (S) signals the presence of a damaging voltage reaction,
- the protective device (VPM) is supplied with power (Usupply) from the rectified phase voltage (U2, V2, W2) that occurs,
- a means (T) is provided for short-circuiting the motor terminal voltage and is triggered by the unique signal (S) when a damaging voltage reaction is present, with an on-state resistance of the rectification means (D1 ... D6) and/or of the short-circuiting means (T) acting as a braking load, **characterized in that** the rectification means are in the form of a three-phase diode bridge (D1 ... D6) between the motor phases (U3, V3, W3 and U4, V4, W4) and the short-circuiting means are in the form of a thyristor (T), with the thyristor (T) short-circuiting all the motor connections via the three-phase diode bridge (D1 ... D6).

2. Protective device according to Claim 1, **characterized in that**, when a damaging voltage reaction is present, the short-circuiting means (T) remains activated until a motor rotation speed of zero is reached.

3. Protective device according to one of Claims 1 or 2, **characterized in that** the unique signal (S) additionally operates a means (MK) when a damaging voltage reaction is present, which means (MK) interrupts the drive regulation.

4. Protective device according to Claim 3, **characterized in that** the drive regulation is interrupted until the end of the braking process.

5. Protective device according to Claim 3 or 4, **characterized in that** a thermal contact (TK) by means of which the drive regulation can be interrupted, is provided for protection of the three-phase diode bridge (D1 ... D6) and of the thyristor (T).

6. Protective device according to one of Claims 1 to 5, **characterized in that** any overvoltage which occurs can be temporarily limited to the capacitor formatting voltage by means of a fixed electrical coupling between intermediate-circuit capacitors (Ck1, Ck2) of the drive regulation (A) and the motor phases (U3, V3, W3 and U4, V4, W4) in the event of failure of the protective device (VPM).

## Revendications

1. Dispositif ( VPM ) de protection vis-à-vis du rebond de tension d'entraînements électriques à excitation permanente, qui est monté entre une électronique ( A ) d'entraînement et un moteur ( M ) sur les phases ( U3, V3, W3 ou U4, V4, W4 ) du moteur, dans lequel
- il est prévu un moyen ( F, FD, K, &, SP ) de formation d'un signal ( S ) clair par redressement ( D1...D6 ) d'une surtension qui apparaît, lequel signale la présence d'un rebond de tension néfaste ;
- le dispositif ( VPM ) de protection alimente en énergie ( Uversorg ) à partir de la tension ( U2, V2, W2 ) de phase redressée ;
- il est prévu un moyen ( T ) de court-circuit de la tension aux bornes du moteur, qui est déclenché par le signal ( S ) clair en présence d'un rebond de tension néfaste, une résistance directe du moyen ( D1...D6 ) redresseur et/ou du moyen ( T ) de court-circuit agissant en tant que charge de frein, **caractérisé en ce que** le moyen redresseur est constitué sous la forme d'un pont ( D1...D6 ) de diode à courant triphasé et le moyen de court-circuit est constitué sous la forme d'un thyristor ( T ), le thyristor ( T ) court-circuitant toutes les bornes du moteur par le pont ( D1...D6 ) de diode à courant triphasé.

2. Dispositif de protection suivant la revendication 1, **caractérisé en ce qu'**en présence d'un rebond de tension néfaste, le moyen ( T ) de court-circuit reste activé jusqu'à ce que soit obtenu une vitesse de rotation du moteur égale à zéro.

3. Dispositif de protection suivant l'une des revendications 1 ou 2, **caractérisé en ce que**, par le signal ( S ) net, il est actionné en présence d'un rebond de tension néfaste en plus un moyen ( MK ) par lequel la régulation de l'entraînement est interrompue.

4. Dispositif de protection suivant la revendication 3, **caractérisé en ce que** la régulation de l'entraînement est interrompue jusqu'à l'achèvement de l'opération de freinage.

5. Dispositif de protection suivant la revendication 3 ou 4, **caractérisé en ce que**, pour protéger le pont ( D1...D6 ) de diode à courant triphasé et le thyristor ( T ), il est prévu un thermocontact ( TK ) par lequel la régulation de l'entraînement peut être interrompue.

6. Dispositif de protection suivant l'une des revendications 1 à 5, **caractérisé en ce que**, par un couplage électrique fixe entre des condensateurs ( Ck1, Ck2 ) de circuit intermédiaire de la régulation ( A ) de l'entraînement et les phases ( U3, V3, W3 ou U4, V4, W4 ) du moteur, une surtension se produisant lors de la défaillance du dispositif ( VPM ) de protection peut être limitée temporairement à la tension de formatage des condensateurs.
